# FASCICULE DE BREVET EUROPEEN

(11) **EP 0 362 354 B1**
(45) Date de publication et mention de la délivrance du brevet: **22.09.1993**
(21) Numéro de dépôt: 89904092.7
(22) Date de dépôt: 30.03.1989
(51) Int. Cl.: C04B 5/00, B03B 9/04, B03B 5/56, C21B 3/06

(54) **PROCEDE DE TRAITEMENT DES LAITIERS GRANULES DE FONTE HEMATITE ET DE FONTE PHOSPHOREUSE**
BEHANDLUNGSVERFAHREN FÜR DIE BEI DER HERSTELLUNG VON HEMATIT- UND PHOSPHOREISEN ERHALTENE GRANULIERTE SCHLACKE
PROCESS FOR TREATING GRANULAR SLAG FORMED DURING THE PRODUCTION OF HEMATITE IRON AND PHOSPHORIC IRON

(30) Priorité: 05.04.1988 FR 8804648
(43) Date de publication de la demande: 11.04.1990
(73) Titulaire: SOCIETE ANONYME V. HERGOTT, F-57140 Woippy (FR)
(72) Inventeur: ANTOINE, Maurice, F-57050 Plappeville (FR)
(74) Mandataire: Aubertin, François
(86) Numéro de dépôt international: FR8900148
(87) Numéro de publication internationale: WO8909751

(56) Documents cités:
- EP-A- 0 166 017
- US-A- 3 717 490
- PATENT Abstracts of Japan, page 3681 C 78 & JP, A, 53119797 (SHIN NIPPON SEITETSU K.K.) 19 octobre 1978.

## Description

La présente invention concerne un procédé de traitement des laitiers granulés issus de hauts fourneaux et, notamment de la production de fonte hématite et de fonte phosphoreuse.

La présente invention trouvera son application dans l'industrie sidérurgique en général.

En fait, les laitiers sont des sous-produits métallurgiques essentiellement composés de silicate et formés au cours des différentes fusions d'élaboration de produits sidérurgiques.

Plus précisément, la présente invention et, notamment, le procédé et les installations qui en font l'objet s'appliquent au traitement des laitiers de fonte dite hématite, à base d'oxyde ferrique (Fe O), issus, directement, des hauts fourneaux et des laitiers de fonte phosphoreuse ayant subit une réaction de prise de type hydraulique.

En somme, ces laitiers, sous-produits de la production de fonte, sont considérés en tant qu'impuretés et recueillis, à l'état liquide, généralement, par différence de densité, dans le creuset constituant la base des hauts fourneaux. Ces laitiers ainsi récupérés et composés en grande partie de la roche mère du minerai, des additifs à sa fusion, de résidus de coque, de calcaire etc... peuvent, ensuite, subir deux formes de traitement distincts. L'un consiste à déverser, simplement, ces laitiers dans une fosse et assurer leur refroidissement lent à l'air. Il en résulte une roche cristalline.

Le second traitement, choisi, notamment, en cas d'intention de valorisation de ce sous produit métallurgique, consiste à projeter ces laitiers en fusion dans un bassin alimenté en eau sous pression. Le refroidissement instantané provoque, ainsi, leur vitrification sous forme de granulés.

Bien évidemment, ce procédé de traitement du laitier par vitrification connaît certaines variantes selon les unités sidérurgiques considérées, toutefois, il subsiste, dans tous les cas, le principe fondamental.

En sortie d'un tel traitement, ces laitiers granulés se présentent, en fait, dans un état peu stable. En effet, en présence d'eau, ils sont susceptibles d'engendrer une réaction hydraulique ayant pour conséquence la formation de géhlenite et d'ettringite. En fait, le produit final obtenu dépend, principalement de la base en présence. Par ailleurs, la réaction est d'autant plus rapide et importante que :
- le laitier granulé comporte une part importante de particules fines, inférieures à 80 micromètres ;
- la surface spécifique blaine de ces particules fines est importante ;
- le pH dans lequel se trouve le laitier granulé est élevé.

Aussi, pour permettre le stockage de ces laitiers granulés et autoriser leur valorisation il est primordial de diminuer l'importance de ces facteurs stimulant leur réaction hydraulique et réduisant les possibilités de valorisation de ces sous produits métallurgiques.

A ce propos, on notera que le principe de l'hydraulicité de ces laitiers granulés présente un intérêt particulier dans le cadre de la composition des ciments dans lesquels ils sont introduits, en proportion importante, après séchage et mouture.

Il s'avère, également, intéressant d'intégrer ces laitiers granulés dans les structures routières soit dans leur état naturel, soit après broyage sommaire augmentant la proportion de particules fines favorisant la réaction hydraulique, donc la prise.

On notera, à ce propos, que ce type de liants hydrauliques présente, non seulement, un intérêt économique mais, également, certaines qualités techniques.

En effet, les éléments de la réaction étant incorporés dans le béton au moment de sa confection, ils permettent de s'affranchir du temps de séchage. De plus, ils confèrent à ce béton un temps de prise très long tout en étant peu sensible à la teneur en eau excédante provenant, par exemple, des précipitations atmosphériques.

Bien entendu, ce problème de traitement des laitiers granulés est d'autant plus important que leur instabilité est importante. A ce propos, il conviendra de distinguer les laitiers granulés de fonte hématite, présentant une structure superficielle instable dès leur vitrification, des laitiers granulés de fonte phosphoreuse produisant des fines, telles que la gehlénite et l'ettringite, dans des proportions moindres au cours de leur manutention et stockage.

Cependant, à l'issue et dans des temps pouvant aller de quelques jours pour les premiers à quelques années pour les seconds, et ce, en fonction de l'environnement rencontré, le phénomène de prise hydraulique se déclenche immanquablement et le matériau stocké devient un bloc monolithique. Si ce problème de stockage ne s'est posé jusqu'à présent ceci provenait d'une production particulièrement importante des produits sidérurgiques dans le passé. De ce fait, la production constante de laitiers granulés permettait de s'affranchir des problèmes de leur conservation et notamment en ce qui concerne les laitiers de fonte phosphoreuse à temps de prise lent.

Cette production des produits sidérurgiques ayant fortement diminuée ces dernières années, tend encore à se réduire, il s'avère, actuellement, nécessaire d'une part, de stocker, dans de bonnes conditions les laitiers granulés de fonte hématite afin d'éviter une rupture dans leur approvisionnement auprès des unités qui en assurent la valorisation. D'autre part, cette production étant, à ce jour, inférieure à la demande, il s'est posé le problème de la revalorisation des laitiers granulés de fonte phosphoreuse, stocké en terril dans le passé et ayant subit une réaction hydraulique.

Toutefois, le traitement de ces laitiers granulés ne doit pas pour autant, engendrer une plus value importante d'un produit, qui à l'origine, s'avérait particulièrement intéressant sur le plan économique et donc tout à fait approprié à son utilisation dans le cadre des matériaux de construction et de conception de réseaux routiers.

La présente invention a pour but de remédier aux inconvénients précités en proposant un procédé de traitement de ces laitiers granulés de fonte hématite et phosphoreuse qui, non seulement, s'avèrent particulièrement simples et peu onéreux et, dans tous les cas évitent d'augmenter sensiblement, le coût de revient de ces produits valorisables que sont ces laitiers granulés.

A cet effet, l'invention concerne un procédé de traitement des laitiers granulés issus de hauts fourneaux et provenant, notamment, de la production de fonte hématite et de fonte phosphoreuse, caractérisée par le fait que :
- on introduit les laitiers granulés dans une unité de lavage et de rinçage pour supprimer, par attrition et sous flux d'eau à pH neutre et à contre courant, des particules fines de dimensions inférieures à 80 micromètres ;
- puis on stocke ces laitiers granulés lavés en terril pour assurer la réduction de leur teneur en eau à 10 %.

Les avantages obtenus grâce à cette invention consistent, essentiellement en ce que les laitiers granulés issus de hauts fourneaux et provenant, notamment, de la production de fonte hématite, sont susceptibles d'être stockés pendant plusieurs mois avant de les utiliser dans d'autres domaines. Il en résulte bien évidemment, une meilleure flexibilité dans le temps quant à l'utilisation de ces laitiers granulés. Quant aux laitiers granulés de fonte phosphoreuse, normalement rendue inutilisable suite à un stockage prolongé en terril, ceux-ci sont, à nouveau, valorisables grâce au présent procédé de traitement qui permet de leur rendre toutes les caractéristiques initiales.

D'autre part, la simplicité de ce procédé et le coût réduit de l'installation permettant sa mise en oeuvre évitent d'accroître, sensiblement, le coût de revient de ces laitiers granulés dans le cadre de leur valorisation.

D'autres buts et avantages de la présente invention apparaîtront au cours de la description qui va suivre et qui n'est donnée, cependant, qu'à titre indicatif et non limitatif.

La compréhension de ces descriptions sera facilitée en se référant au dessin joint en annexe et dans lequel :

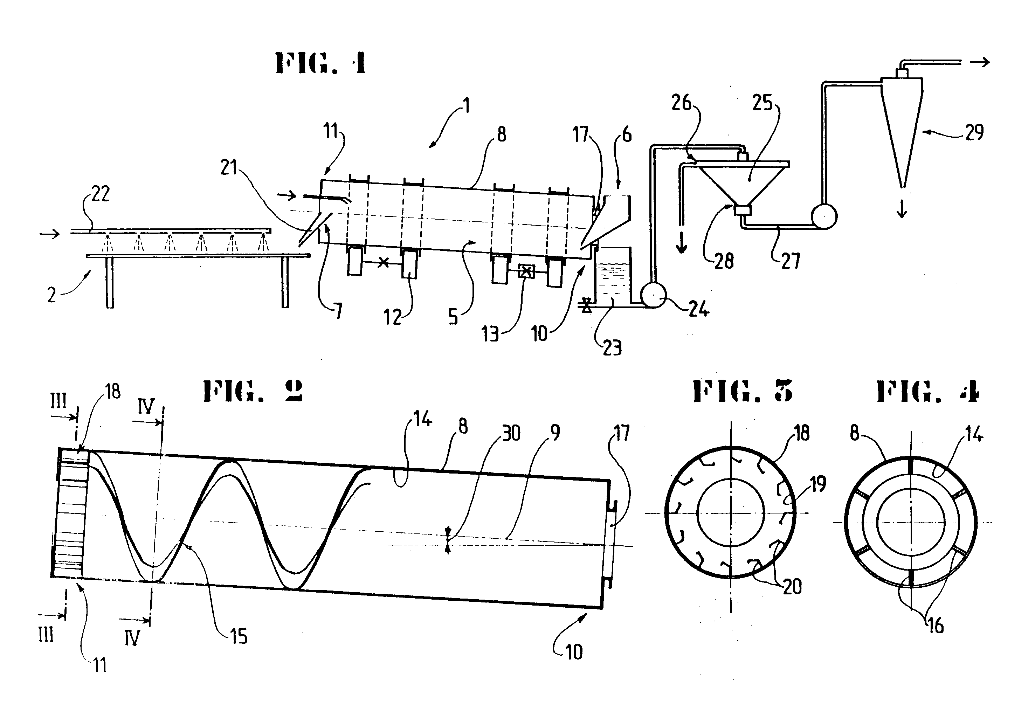

- la figure 1 est une vue schématisée de l'installation permettant la mise en oeuvre du procédé de traitement conforme à l'invention
- la figure 2 est une vue schématisée du tambour constituant l'unité de lavage et de rinçage des laitiers granulés
- la figure 3 est une vue schématisée et en coupe selon III-III de la figure 2
- la figure 4 est une vue schématisée et en coupe selon IV-IV de la figure 2.

La présente invention est relative à un procédé de traitement des laitiers granulés issus de hauts fourneaux et provenant, notamment, de la production de fonte hématite et de fonte phosphoreuse.

En fait, ces laitiers granulés, en raison de leur composition chimique moyenne, à savoir :
- oxyde de calcium ou CaO environ 43 %
- oxyde de silicium ou SiO2 environ 30 %
- oxyde de magnésium ou MgO environ 5 %
- oxyde d'aluminium ou Al2O3 environ 17 % et le rapport CaO sur SiO2, leur confère une aptitude à une réaction hydraulique susceptible d'engendrer la formation de gehlénite et d'ettringite.

A ce propos, on notera que les laitiers granulés, issus de fonte hématite présentent une structure superficielle instable dès leur premier âge, ce qui entraîne, lors des opérations de manutentions et de stockage, la formation de ces fines. Quant aux laitiers granulés de fonte phosphoreuse ceux-ci créent également des fines, mais dans des proportions moindres et plus stables lors de ces manutentions et stockages.

Aussi, il conviendra de faire une distinction dans le cadre du procédé de traitement de ces laitiers granulés de fonte hématite par rapport aux laitiers granulés de fonte phosphoreuse. Notamment, il n'est utile de traiter ces derniers, qu'après un temps de séjour en terril, ayant eu pour conséquence d'agglomérer ces laitiers granulés.

Toutefois, on notera que, quelque soit la qualité des laitiers considérés, trois facteurs sont déterminants quant à l'importance et la rapidité selon laquelle s'effectue cette réaction hydraulique, à savoir :
- la quantité des particules inférieures à 80 micromètres.
- la surface spécifique blaine de ces particules fines,
- et le pH du milieu dans lequel sont stockés les laitiers granulés.

Plus précisément, plus ce PH sera élevé et supérieur à 8, plus la réaction hydraulique sera importante et rapide.

En fait, le procédé de traitement, objet de la présente invention a pour but d'assurer la suppression des particules inférieures à 80 micromètres, le contrôle du PH du milieu dans lequel sont stockés les laitiers granulés ne posant aucune difficulté à l'heure actuelle.

Ainsi, ce procédé, objet de l'invention, consiste à introduire les laitiers granulés dans une unité de lavage et de rinçage 1 dans laquelle on assure la suppression de ces particules fines par attrition et flux d'eau à contre courant.

Puis, selon ce procédé, les laitiers granulés lavés sont déversés sur un crible 2 le long duquel ils sont pulvérisés d'eau sous pression de manière à les débarrasser des dernières traces d'éléments instables.

Finalement, les laitiers granulés traités sont véhiculés, par l'intermédiaire de moyens de transport spécifiques, afin d'en assurer leur stockage sous forme de terril de hauteur limitée.

En ce qui concerne les moyens de transport spécifiques, ceux-ci sont constitués, de préférence, de transporteurs à bandes évitant la formation de particules fines. Par ailleurs, la hauteur des terrils est variable selon le produit stocké et sera limitée, à, environ, cinq à sept mètres. En fait, cette forme de stockage a pour but, d'une part, d'éviter une pression trop importante susceptible de générer des particules fines et, d'autre part, de réduire la teneur en eau des laitiers granulés à une proportion de l'ordre de dix pour cent afin d'en autoriser l'utilisation et la valorisation dans les domaines des matériaux de construction ou autres.

Tel que déjà précisé plus haut dans la description, il convient de faire une distinction entre les laitiers granulés issus de fonte hématite et les laitiers granulés provenant de la fonte phosphoreuse. En effet, les premiers, généralement moins stables sont, initialement, stockés sur une durée réduite allant de quelques jours à quelques semaines en sortie des hauts fourneaux. Ce stockage a pour but d'assurer la fixation, par oxydation, des éléments instables.

Quant aux laitiers granulés provenant de fonte phosphoreuse, ceux-ci étant de propriété plus stable, il est fréquent d'en assurer le traitement uniquement au-delà d'un temps de stockage prolongé au cours duquel s'est produit le phénomène de prise hydraulique. Aussi, il conviendra, avant d'introduire ces laitiers granulés de fonte phosphoreuse dans l'unité de lavage et de rinçage 1, de les ramener à une granulométrie de 0 à 6 mm. Ceci s'obtient par une opération de broyage et de criblage.

Une installation permettant la mise en oeuvre du procédé précité est représentée sur les différentes figures du dessin joint en annexe.

Plus précisément, tel que décrit ci-dessus, les laitiers granulés, au cours de leur traitement, sont introduit dans une unité de lavage et de rinçage 1.

Selon un mode de réalisation préférentiel, celle-ci est constituée par un chemin de transfert 5, incliné par rapport à l'horizontale et le long duquel se déplacent les laitiers granulés depuis une zone d'alimentation 6, disposée en contre-bas, jusqu'à une zone d'évacuation 7 située à un niveau supérieur.

Préférentiellement, ce chemin de transfert 5 est constitué par un tambour 8 d'axe de rotation 9 incliné par rapport à l'horizontale selon un angle 30 de l'ordre de 5 à 10 degrés et coopérant, à son extrémité inférieure 10 avec la zone d'alimentation 6 et à son extrémité supérieure 11, avec la zone d'évacuation 7. En fait, ce tambour 8 est monté pivotant autour de son axe 9 sur un châssis 12 intégrant les moyens moteurs 13 susceptibles d'entraîner en rotation ledit tambour 8. Etant donné que le chemin de transfert 5, constitué par ce dernier, est ascendant depuis la zone d'alimentation 6 à la zone d'évacuation 7, il est nécessaire de munir sa paroi interne 14 dudit tambour 8 de moyens de transport 15 des laitiers granulés.

Selon un mode de réalisation préférentiel, ces moyens de transport 15 sont constitués d'une ou plusieurs ailettes 16 rapportées perpendiculairement sur ladite paroi interne 14 du tambour 8 et empruntant une trajectoire hélicoïdale. Ainsi, ces ailettes 16 provoquent, telles une vis sans fin, l'avancement des laitiers granulés à l'intérieur du tambour 8.

Quant à la zone d'alimentation 6, celle-ci se présente sous forme d'une ouverture 17 pratiquée à l'extrémité inférieure 10 du tambour 8 et au travers de laquelle sont introduits les laitiers granulés par l'intermédiaire d'une trémie conique. Cette ouverture 17 permet, en outre, de récupérer l'eau ayant servi au lavage et rinçage de ces laitiers granulés. Plus précisément, cette eau est introduite dans le tambour 8 à son extrémité supérieure 11 au niveau de la zone d'évacuation 7 provoquant, ainsi, un flux à contre-courant.

La zone d'évacuation 7 se présente, en fait, comme un prolongement 18 du tambour 8, situé au-delà de l'extrémité supérieure des ailettes 16 équipant la paroi interne 14 de ce dernier. Préférentiellement, ce prolongement 18 du tambour 8 comporte une ou plusieurs pâles 20 en forme de godets rapportées, sur sa paroi interne 19 et disposees, radialement, par rapport à l'axe de rotation 9 du tambour 8. Aussi, ces pâles 20 permettent de prélever les laitiers granulés du fond dudit tambour 8 pour les déverser dans une goulotte d'évacuation 21.

L'installation permettant la mise en oeuvre du procédé précité comporte, en outre, un crible 2 disposé en sortie de l'unité de lavage et de rinçage 1. On notera que ce crible 2 est muni d'une rampe d'arrosage 22 susceptible de pulvériser de l'eau sous pression sur les laitiers granulés lavés afin de décharger ceux-ci de leurs dernières traces d'éléments instables.

Dans le cadre du procédé de traitement des laitiers granulés issus de hauts fourneaux, il est également prévu, selon l'invention, une opération d'épuration de l'eau ayant servi au lavage desdits laitiers granulés. Cette eau est chargée, principalement, de particules fines provenant, tant de l'opération de rinçage des laitiers granulés sur le crible que leur lavage dans le tambour 8.

A ce propos, on précisera que l'eau ayant servi au rinçage des laitiers granulés au-dessus du crible est réinjectée dans l'unité de lavage et de rinçage 1. Cette eau est, ensuite, recueillie à la partie inférieure du tambour 8 au travers de l'ouverture 17 et stockée dans un premier réservoir tampon 23.

Puis elle est à nouveau, prélevée de ce réservoir tampon 23, par l'intermédiaire d'une pompe de relevage 24, et réinjectée dans une cuve de décantation 25 où elle vient à se décharger des impuretés recueillies au cours des différentes opérations de lavage.

L'eau 26 recueillie à la partie supérieure de la cuve de décantation 25 est susceptible d'être réinjectée dans le circuit de traitement des laitiers granulés. Quant à l'eau 27 à forte concentration d'impuretes récupérées à la base 28 de la cuve de décantation 25, celle-ci peut être envoyée dans une unité de traitement complémentaire 29 permettant de réduire, d'avantage, la teneur en eau des particules fines recueillies.

En conclusion, le procédé de traitement faisant l'objet de la présente invention et qui est décrit ci-dessus, permet, en somme, de conserver, dans de bonnes conditions ou de redonner toutes leur caractéristiques initiales aux laitiers granulés qui, habituellement, en raison de leur instabilité imposaient leur valorisation immédiate ou, dans tous les cas, peu de temps après leur production.

## Revendications

1. Procédé de traitement des laitiers granulés issus de hauts fourneaux et provenant, notamment, de la production de fonte hématite et de fonte phosphoreuse, caractérisé par le fait que :
- on introduit les laitiers granulés dans une unité de lavage et de rinçage pour supprimer par attrition et sous flux d'eau à contre-courant et à pH neutre, les particules fines de dimensions inférieures à 80 micromètres ;
- puis on stocke ces laitiers granulés lavés en terril pour assurer la réduction de leur teneur en eau à 10 %.

2. Procédé de traitement selon la revendication 1 caractérisé par le fait qu'on véhicule les laitiers granulés aux moyens de transporteurs à bandes afin de les stocker en terril de 5 à 7 mètres de hauteur.

## Claims

1. Process for treating granular slag formed in blast furnaces and, viz., during the production of hematite pig iron and phosphor pig iron, characterized in that:
- the granular slags are introduced into a washing and flushing unit to eliminate, through attrition and under backwards water-flow at a neutral pH, fine particles of sizes of less than 80 micrometers,
- then these washed granular slags are tipped to ensure the reduction of their water contents to 10%.

2. Treatment process according to claim 1, characterized in that the granular slags are conveyed by means of belt conveyers, in order to store them in 5 to 7 meter high tips.

## Patentansprüche

1. Behandlungsverfahren für granulierte Schlacken aus Hochöfen und, nämlich, für diejenigen, die bei der Herstellung von Hämatit- und Phosphoreisen erhalten werden, dadurch gekennzeichnet, daß:
- die granulierten Schlacken in eine Wasch- und Spüleinheit eingeführt werden, zum Entfernen, durch Zerreiben und unter Wassergegenströmung mit einem neutralen pH-Wert, von Feinpartikeln einer Größe kleiner als 80 Mikrometer,
- diese gewaschenen granulierten Schlacken anschließend in Halden aufgelagert werden, um die Verminderung deren Wassergehalt auf 10% zu sichern.

2. Behandlungsverfahren nach Anspruch 1, dadurch gekennzeichnet, daß die granulierten Schlacken mittels Bandförderer gefördert werden, um sie in Halden einer Höhe von 5 bis 7 aufzulagern.
